# EUROPÄISCHE PATENTSCHRIFT

(11) **EP 3 546 324 B1**
(45) Veröffentlichungstag und Bekanntmachung des Hinweises auf die Patenterteilung: **27.01.2021**
(21) Anmeldenummer: 19161531.9
(22) Anmeldetag: 08.03.2019
(51) Int. Cl.: B62D 25/20, B60R 19/24, B60D 1/56, B60R 19/26

(54) **STOSSFÄNGERANORDNUNG FÜR EIN KRAFTFAHRZEUG**
BUMPER ASSEMBLY FOR A MOTOR VEHICLE
DISPOSITIF PARE-CHOCS POUR UN VÉHICULE AUTOMOBILE

(30) Priorität: 28.03.2018 DE 102018107487
(43) Veröffentlichungstag der Anmeldung: 02.10.2019
(73) Patentinhaber: Benteler Automobiltechnik GmbH, 33102 Paderborn (DE)
(72) Erfinder: Aalberg, Johannes, 2817 Gjøvik (NO); Håker, Jens Christian Stampe, 2815 Gjøvik (NO)
(74) Vertreter: Sprenger, Gerrit Lars Eike

(56) Entgegenhaltungen:
- DE-A1-102007 060 113
- JP-A- 2008 037 220
- JP-A- 2012 153 254
- JP-A- 2012 224 099

## Beschreibung

Die Erfindung betrifft eine Stoßfängeranordnung für ein Kraftfahrzeug nach dem Oberbegriff des Patentanspruchs 1.

Eine derartige Stoßfängeranordnung für ein Kraftfahrzeug ist beispielsweise in der DE 10 2011 010 798 A1 gezeigt. Diese Stoßfängeranordnung für ein Kraftfahrzeug weist dabei einen Querträger auf, an dem als Einkammerhohlprofil ausgebildete Crashboxen mit ihrem einen Ende an diesem Querträger angeordnet sind. An dem, dem Querträger gegenüberliegenden Ende der Crashboxen sind Crashboxflanschplatten angeordnet, mit deren Hilfe die Stoßfängeranordnung an einer Karosserie oder einem Fahrgestell eines Kraftfahrzeuges angeordnet werden kann.

Bei der dortigen Stoßfängeranordnung ist eine weitere Flanschplatte vorgesehen, an der ein hülsenförmiges Lochelement mit einem Innengewinde angeordnet ist, in welche eine Abschleppöse mit einem entsprechenden Außengewinde lösbar angeordnet werden kann. Diese gesamte Flanschplatte wird dabei zwischen der Crashboxflanschplatte und dem Kraftfahrzeug angeordnet, wobei das hülsenförmige Lochelement der Flanschplatte durch eine Öffnung in der Crashboxflanschplatte in die Crashbox hineinragt. An dem Querträger, der gegenüberliegend der Crashboxflanschplatte an der Crashbox angeordnet ist, ist dabei eine Montageöffnung vorgesehen, durch welche eine entsprechende Abschleppöse in die Crashbox hineingeführt werden kann und mittels ihres Außengewindes in das Innengewinde des hülsenförmigen Lochelementes eingreift und somit mit der Stoßfängeranordnung verbindbar ist. Die Abschleppöse ragt dabei dann aus dem Querträger heraus, sodass die Öse frei zugänglich ist und ein Kraftfahrzeug mit einer derartigen Stoßfängeranordnung daran abgeschleppt werden kann. Ferner wird in der DE 10 2011 010 798 A1 auch noch ein separates auf der Flanschplatte angeordnetes und aus einzelnen Abstützflanschen aufgebautes Stützelement für das Lochelement gezeigt.

Aus der EP 1 721 786 A1 sind Stoßfängeranordnungen bekannt, bei denen ein integriertes Gewinde in einer Hohlkammer einer asymmetrisch extrudierten und als Mehrkammerprofil ausgebildeten Crashbox verwendet wird, wobei das Gewinde im vorderen beziehungsweise mittleren Längenabschnitt der Crashbox angeordnet ist. Problematisch bei diesen Stoßfängeranordnungen ist ein schlechtes Faltverhalten durch den entsprechenden Gewindeblock. JP2012224099 A offenbart eine Stoßfängeranordnung gemäß dem Oberbegriff des Patentanspruchs 1.

Es ist daher Aufgabe der Erfindung, eine Stoßfängeranordnung bereitzustellen, wobei in eine derartige Stoßfängeranordnung eine entsprechende Aufnahme zur lösbaren Anordnung einer Abschleppeinrichtung sicher innerhalb dieser Stoßfängeranordnung kraft- und/oder stoffschlüssig ohne Rücksicht auf geringe Toleranzen bei der Aufnahme und der Crashboxen fixiert werden kann. Weiterhin ist es Aufgabe der Erfindung, die Herstellung möglichst einfach mit möglichst wenig Verfahrensschritten zu gewährleisten, wobei zusätzlich auch die Aufwendungen für die Logistik reduziert werden sollen.

Gelöst wird diese Aufgabe durch eine Stoßfängeranordnung für ein Kraftfahrzeug mit allen Merkmalen des Patentanspruchs 1. Vorteilhafte Ausgestaltungen der Erfindung finden sich in den Unteransprüchen.

Die erfindungsgemäße Stoßfängeranordnung für ein Kraftfahrzeug weist dabei einen Querträger auf, an dem Crashboxen gekoppelt sind, wobei an den Crashboxen gegenüberliegend dem Querträger Crashboxflanschplatten zum Befestigen der Crashboxen an einer Karosserie oder einem Fahrgestell eines Kraftfahrzeuges angeordnet sind. Dabei ist an wenigstens einer Crashboxflanschplatte eine sich in Richtung des Querträgers erstreckende Aufnahme kraft- und/oder stoffschlüssig angeordnet, wobei die Aufnahme zur lösbaren Anordnung einer Abschleppeinrichtung, wie beispielsweise einer Abschleppöse, ausgebildet ist. Erfindungsgemäß ist dabei die wenigstens eine Crashboxflanschplatte als Hohlkammerprofil ausgebildet, welches besonders vorteilhaft einstückig ausgebildet ist.

Durch die erfindungsgemäße Stoßfängeranordnung ist es nunmehr ermöglicht, zur Herstellung einer derartigen Stoßfängeranordnung möglichst wenig Teile auf Vorrat zu halten, da die Aufnahme zur lösbaren Anordnung der Abschleppeinrichtung direkt an der Crashboxflanschplatte angeordnet ist, wobei die Crashboxflanschplatte mit der Aufnahme zur lösbaren Anordnung der Abschleppeinrichtung zur Montage der Stoßfängeranordnung als ein einheitliches, vorteilhafterweise einstückiges Bauteil zur Verfügung gestellt werden kann. Alternativ ist es natürlich auch möglich die Aufnahme zur lösbaren Anordnung der Abschleppeinrichtung erst bei der Montage der Stoßfängeranordnung mit der Crashboxflanschplatte zu fügen. Die kraft-, form- und/oder stoffschlüssige Verbindung der Aufnahme zur lösbaren Anordnung einer Abschleppeinrichtung mit der Crashboxflanschplatte kann dabei mittels einer Schweißverbindung, einer Schraubverbindung oder dergleichen erfolgen.

Weiterhin ist durch die erfindungsgemäße Ausgestaltung der Stoßfängeranordnung keine besondere Rücksicht auf möglichst geringe Toleranzbereiche bei der Aufnahme und den Crashboxen zu berücksichtigen, da diese nicht direkt miteinander gekoppelt werden. Durch die Anordnung der Aufnahme an der Crashboxflanschplatte ist es zudem gewährleistet, dass beim Abschleppen des Kraftfahrzeuges die Crashboxen selbst nicht belastet werden, da die Aufnahme zur lösbaren Anordnung der Abschleppeinrichtung über die Crashboxflanschplatte direkt mit der Karosserie beziehungsweise dem Fahrgestell des Kraftfahrzeuges gekoppelt ist und dabei dann keine Belastung der Crashboxen beziehungsweise Beeinträchtigung des Deformationsverhaltens auftritt.

Vorteilhafterweise ist die Aufnahme als Gewindehülse mit einem Innengewinde ausgebildet.

Nach einer ersten vorteilhaften Ausgestaltung der Erfindung ist es vorgesehen, dass die wenigstens eine Crashboxflanschplatte als Einkammerhohlprofil ausgebildet ist. Derartige Einkammerhohlprofile lassen sich verfahrenstechnisch in ausgereiften Verfahren in einfacher Weise herstellen. Das gleiche gilt auch für die Ausgestaltung der wenigstens einen Crashboxflanschplatte als Mehrkammerhohlprofil. Derartige Hohlprofile weisen zudem eine sehr gute Steifigkeit auf, sodass auch diese als Hohlkammerprofile ausgebildeten Crashboxflanschplatten im Falle eines Crashs zusätzlich zu den Crashboxen selbst noch Energie in Verformungsenergie umwandeln können. Eine Durchbiegung der Crashboxflanschplatte durch Zugkräfte beim Abschleppen oder Verzurren des Kraftfahrzeugs über die Aufnahme wird unterbunden. Auch hierdurch ist die Sicherheit der Insassen eines Kraftfahrzeuges mit einer erfindungsgemäßen Stoßfängeranordnung nochmals erhöht.

Nach einem weiteren Gedanken der Erfindung weist die wenigstens eine Crashboxflanschplatte eine Vorderwand, eine Rückwand sowie zwei die Vorderwand und die Rückwand verbindende Seitenwände auf. Durch diese Ausgestaltung wird durch die Rückwand, die Vorderwand sowie in die beiden Seitenwände ein Hohlraum gebildet, in welchem sich das Einkammer- bzw. Mehrkammerhohlprofil ausbildet. Bei der Ausbildung der Crashboxflanschplatte als Mehrkammerhohlprofil ist innerhalb der Crashboxflanschplatte noch wenigstens eine die Vorderwand und die Rückwand verbindende Innenwand vorgesehen, die sich vorzugsweise in die gleiche Richtung erstreckt, wie die Seitenwände. Allerdings können zudem zusätzlich oder anstatt der die Vorder- und Rückwand verbindende Innenwände andere Innenwände vorgesehen sein, welche die Seitenwände miteinander verbinden, sich aber auch in die gleiche Richtung erstrecken, wie die Seitenwände.

Weiterhin von Vorteil ist es, wenn die Rückwand Stege aufweist, welche über die Seitenwände hinausragen. Mittels derartiger Stege ist es in einfacher Weise ermöglicht, die Crashboxflanschplatte über Montageöffnungen in diesen Stegen an einer Kraftfahrzeugkarosserie, insbesondere einem Längsträger einer solchen in einfacher Weise insbesondere lösbar zu befestigen, wenn die Montage beispielsweise mit Schrauben erfolgt.

Nach einer besonderen Ausgestaltung der Erfindung ist auf der Vorderwand der wenigstens einen Crashboxflanschplatte eine Crashbox gefügt. Durch diese Ausgestaltung der Erfindung stellt die Crashboxflanschplatte im Wesentlichen eine Verlängerung der Crashbox dar. Durch die Ausbildung als Hohlkammerprofil trägt sie nämlich wie bereits erwähnt ebenfalls zur Energieabsorption im Falle eines Crashs bei, sodass die Sicherheit der Kraftfahrzeuginsassen eines Kraftfahrzeuges mit einer erfindungsgemäßen Stoßfängeranordnung nochmals erhöht ist.

Alternativ ist es auch möglich, eine Crashbox auf der Rückwand der Crashboxflanschplatte zu fügen, insbesondere im Bereich der über die Seitenwände hinausragenden Stege der Rückwand. Insoweit reicht die Hohlkammer der Crashboxflanschplatte dann in die entsprechende Crashbox hinein. Damit ist es zusätzlich möglich, ein zweites Kraftniveau Stoßfängersystem über die Deformationslänge der Crashbox zu realisieren.

Von Vorteil ist es dabei, dass die Crashbox derart auf der Vorderwand gefügt ist, dass sich die Crashbox an wenigstens einer der Seitenwände abstützt beziehungsweise daran anliegt. Hierdurch ist nochmals eine bessere und stabilere Verbindung zwischen Crashbox und Crashboxflanschplatte erreicht. Insbesondere wenn die Crashbox an beiden Seitenwänden anliegt, wird nicht nur eine verbesserte und stabilere Verbindung zwischen Crashbox und Crashboxflanschplatte erreicht.

Besonders vorteilhaft ist es zudem, wenn die wenigstens eine Crashboxflanschplatte als Extrusionsprofil ausgebildet ist. Eine derartige Ausgestaltung der Crashboxflanschplatte ermöglicht eine einfache Herstellung einer erfindungsgemäßen Crashboxflanschplatte als einstückiges Bauteil, das entsprechend weiterverarbeitet werden kann und deutlich weniger Logistikaufwand beansprucht als ein aus mehreren Einzelteilen gebildetes Bauteil.

Grundsätzlich ist es erfindungsgemäß möglich, dass die Crashboxen der erfindungsgemäßen Stoßfängeranordnung einerseits als Einkammerhohlprofil und andererseits als Mehrkammerhohlprofil ausgebildet sind. Solche Hohlprofile haben sich bei Crashboxen bewährt, da durch sie in besonders einfacher und guter Weise Energieeinträge unter gezielter Deformation der Crashboxen aufnehmen lassen, sodass dadurch für die gesamte Stoßfängeranordnung ein besonders gutes Energieaufnahmevermögen resultiert, welches insbesondere im Crashfall die Sicherheit der Kraftfahrzeuginsassen erhöht. Bei einem Mehrkammerhohlprofil sind dabei die mehreren Kammern derart ausgebildet, dass sie sich jeweils über die gesamte Längserstreckung der Crashbox erstrecken und dabei durch unterschiedliche Wände voneinander getrennt sind.

Nach einem weiteren Gedanken der Erfindung ist innerhalb der wenigstens einen Crashboxflanschplatte eine durchgehende Öffnung von der Rückwand zur Vorderwand vorgesehen, in welche die Aufnahme zur lösbaren Anordnung einer Abschleppeinrichtung durchsteckbar ist. Durch eine derartige Ausgestaltung der Erfindung ist es möglich, die Aufnahme zur lösbaren Anordnung einer Abschleppeinrichtung bereits im Vorfeld an der Crashboxflanschplatte zu montieren, wobei sie in einfacher Weise durch die durchgehende Öffnung hindurchgesteckt und dann entsprechend mit entsprechenden Verbindungsverfahren, beispielsweise durch Verschweißen, mit der Crashboxflanschplatte gefügt wird. Durch eine derartige Ausgestaltung der Erfindung wird die Aufnahme zur lösbaren Anordnung einer Abschleppeinrichtung besonders stabil innerhalb der Crashboxflanschplatte angeordnet, da diese als Hohlkammerprofil ausgebildete Crashboxflanschplatte mit ihrer Rückwand, ihrer Vorderwand und ihren Seitenwänden sowie gegebenenfalls im Falle eines Mehrkammerprofils den dann vorhandenen Innenwänden eine besonders gute Abstützung der Aufnahme zur lösbaren Anordnung einer Abschleppeinrichtung realisiert werden kann. Dabei müssen keine zusätzlichen Stützelemente zur Abstützung dieser Aufnahme verwendet werden, da derartige Stützwände durch die unterschiedlichen Wände innerhalb der Crashboxflanschplatte bereits vorhanden sind.

Nach einer weiteren vorteilhaften Ausgestaltung der Erfindung ist es vorgesehen, dass die Aufnahme zur lösbaren Anordnung einer Abschleppeinrichtung innerhalb einer der Crashboxen angeordnet ist. Hierdurch wird die Aufnahme zur lösbaren Anordnung der Abschleppeinrichtung innerhalb der Crashbox selbst ohne Kontakt zu den Wänden der Crashbox angeordnet, so dass das Deformations- beziehungsweise Faltverhalten bei einem Aufprall nicht beeinträchtigt wird. Allerdings ist es nach einem anderen Gedanken der Erfindung natürlich auch möglich, dass die Aufnahme außerhalb der Crashboxen - aber auch ohne Kontakt zu den Wänden der Crashbox - angeordnet ist.

Nach einer weiteren Ausgestaltung der Erfindung ist es vorgesehen, dass die Aufnahme zur lösbaren Anordnung einer Abschleppeinrichtung mit der Crashboxflanschplatte, an der sie angeordnet ist, gefügt, insbesondere verschweißt oder verschraubt ist. Dabei hat es sich bewährt, dass die Aufnahme mit der Rückwand und/oder der Vorderwand der Crashboxflanschplatte verschweißt ist. Hierdurch ist in einfacher Weise gewährleistet, dass die Aufnahme zur lösbaren Anordnung einer Abschleppeinrichtung unverlierbar an der entsprechenden Crashboxflanschplatte beziehungsweise an der erfindungsgemäßen Stoßfängeranordnung kraft- und/oder stoffschlüssig angeordnet ist. Dabei kann es vorgesehen sein, dass die Aufnahme mittels Schrumpf- oder Presspassung in der Öffnung innerhalb der Crashboxflanschplatte eingesetzt ist.

Damit die entsprechende Abschleppeinrichtung mit der Aufnahme zu ihrer lösbaren Anordnung verbunden werden kann, ist es nach einem weiteren Gedanken der Erfindung vorgesehen, dass der Querträger eine durchgehende Öffnung aufweist, mittels welcher die Aufnahme für eine lösbare Abschleppeinrichtung zugänglich ausgebildet ist. Hierdurch ist in besonders einfacher eise ermöglicht, dass eine Abschleppeinrichtung, insbesondere eine Abschleppöse, durch diese Öffnung in dem Querträger hindurchgesteckt werden kann und mit der Aufnahme für die Abschleppeinrichtung verbunden werden kann. Bevorzugt weist auch die Crashboxflanschplatte eine Öffnung auf, so dass die Abschleppeinrichtung auch teilweilweise durch diese hindurchragend befestigt werden kann.

Vorteilhafterweise ist dabei vorgesehen, dass an der Abschleppeinrichtung ein Außengewinde angeordnet ist, das in ein entsprechendes Innengewinde der Aufnahme für die Abschleppeinrichtung eingreift. Durch ein derartiges Gewindezusammenspiel kann die Abschleppeinrichtung in einfacher und sicherer Weise ohne Verwendung eines Werkzeuges mit der Stoßfängeranordnung verbunden werden.

Nach einer weiteren Ausgestaltung der Erfindung ist es vorgesehen, dass die die Rückwand und die Vorderwand der Crashboxflanschplatte verbindenden Innenwände innerhalb des Hohlkammerprofils diagonal verlaufend und gegebenenfalls sich kreuzend ausgebildet sind. Hierdurch wird ein Lastpfad innerhalb der Crashboxflanschplatte gebildet, durch den besonders gut Scher- und Zugkräfte aufgenommen werden können.

Nach einem weiteren Gedanken der Erfindung ist die Aufnahme innerhalb oder außerhalb der Crashbox angeordnet ist. Sofern die Aufnahme außerhalb der Crashbox angeordnet ist, ist es nicht notwendig in den Querträger eine Öffnung zum Durchstecken der lösbaren Abschleppeinrichtung anzuordnen, da sie außerhalb der Crashbox zugänglich ist.

Weitere Ziele, Vorteile, Merkmale und Anwendungsmöglichkeiten der vorliegenden Erfindung ergeben sich aus der nachfolgenden Beschreibung eines Ausführungsbeispiels anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figuren 1 und 3:: ein erstes Ausführungsbeispiel einer Crashboxflanschplatte für eine erfindungsgemäße Stoßfängeranordnung in verschiedenen Ansichten,
- Figuren 4 bis 6:: die Crashboxflanschplatte der Figuren 1 bis 3 mit eingesetzter Aufnahme zur lösbaren Anordnung einer Abschleppeinrichtung in verschiedenen Ansichten,
- Figur 7:: die Crashboxflanschplatte der Figuren 1 bis 6 mit daran angeordneter Crashbox,
- Figur 8:: die Anordnung von Crashbox und Crashboxflanschplatte gemäß Figur 7 mit daran angeordnetem Querträger,
- Figur 9b und 9d:: ein Ausführungsbeispiel einer Crashboxflanschplatte für eine erfindungsgemäße Stoßfängeranordnung in zwei unterschiedlichen Ansichten,

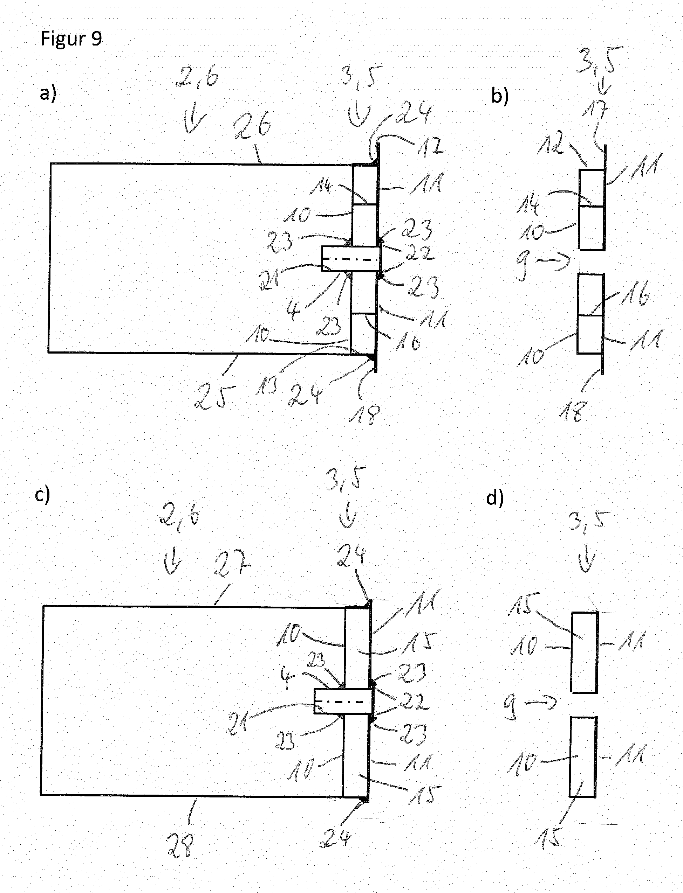

- Figur 9a und 9c:: die Crashboxflanschplatte der Figuren b und d mit daran angeordneter Crashbox,

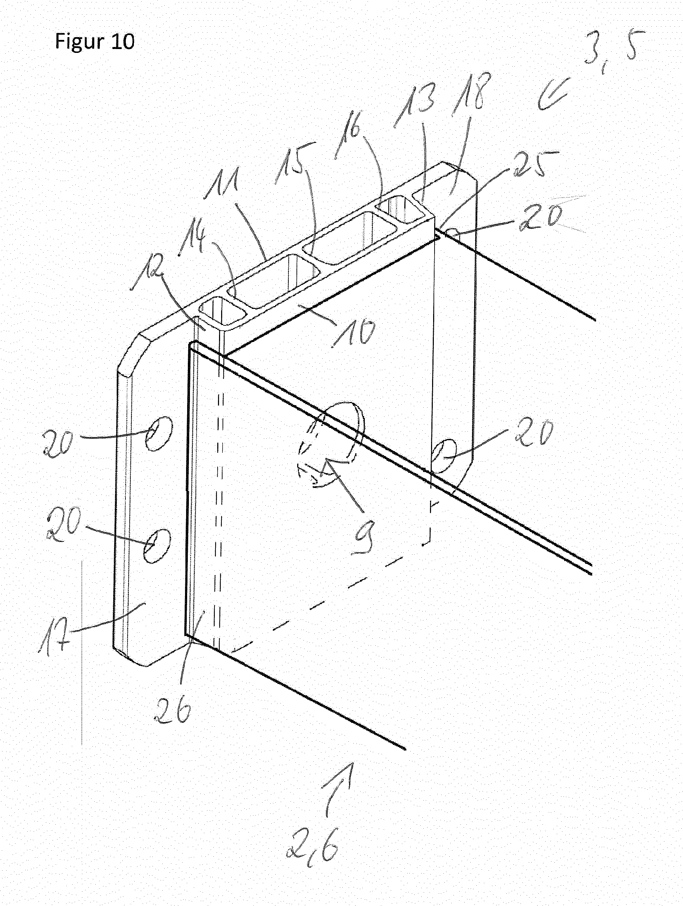

- Figur 10:: ein Ausführungsbeispiel einer Crashboxflanschplatte mit daran angeordneter Crashbox in einer perspektivischen Ansicht,

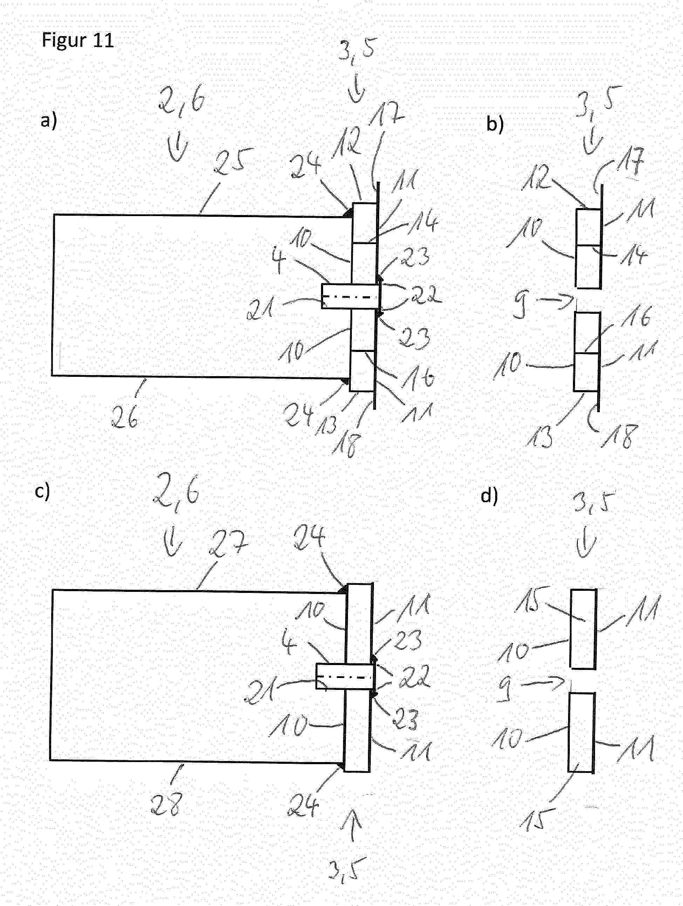

- Figur 11b und 11d:: ein Ausführungsbeispiel einer Crashboxflanschplatte für eine erfindungsgemäße Stoßfängeranordnung in zwei unterschiedlichen Ansichten,
- Figur 11a und 11c:: die Crashboxflanschplatte der Figuren b und d mit daran angeordneter Crashbox,

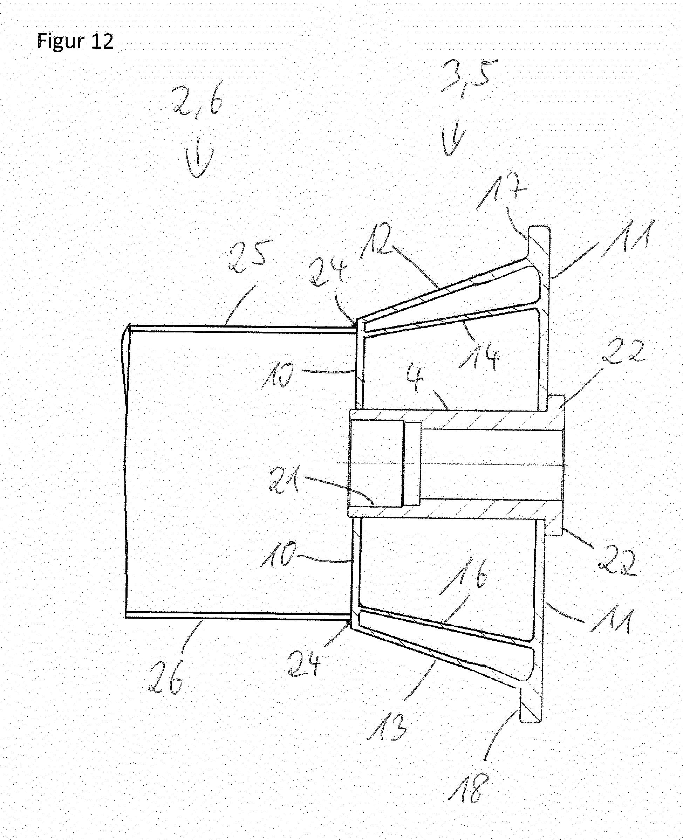

- Figur 12:: ein Ausführungsbeispiel einer Crashboxflanschplatte mit daran angeordneter Crashbox in einer Querschnittdarstellung,

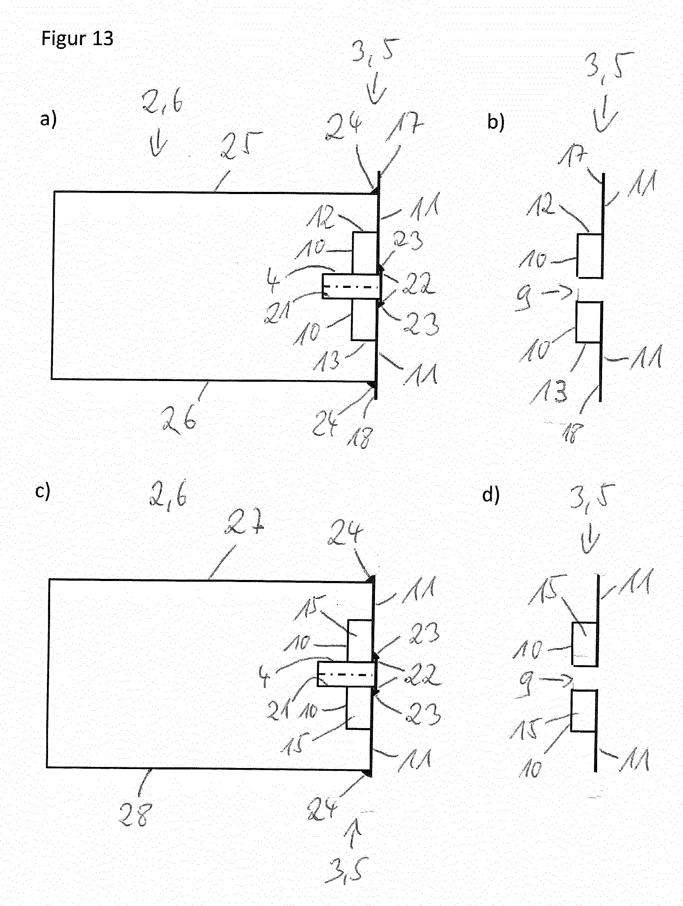

- Figur 13b und 13d:: ein Ausführungsbeispiel einer Crashboxflanschplatte für eine erfindungsgemäße Stoßfängeranordnung in zwei unterschiedlichen Ansichten,
- Figur 13a und 13c:: die Crashboxflanschplatte der Figuren b und d mit daran angeordneter Crashbox,

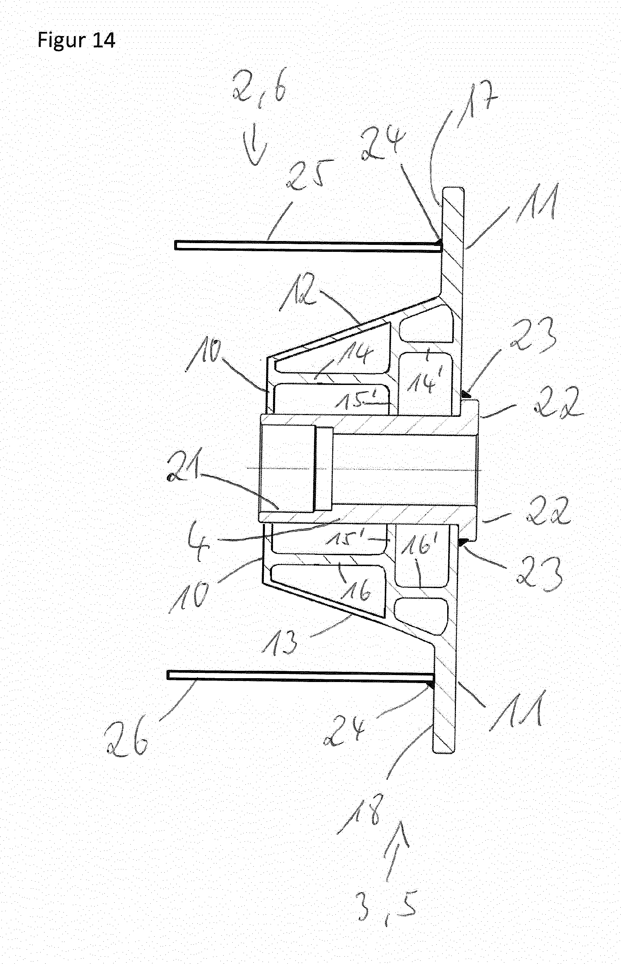

- Figur 14:: ein weiteres Ausführungsbeispiel einer Crashboxflanschplatte mit daran angeordneter Crashbox in einer Querschnittdarstellung,

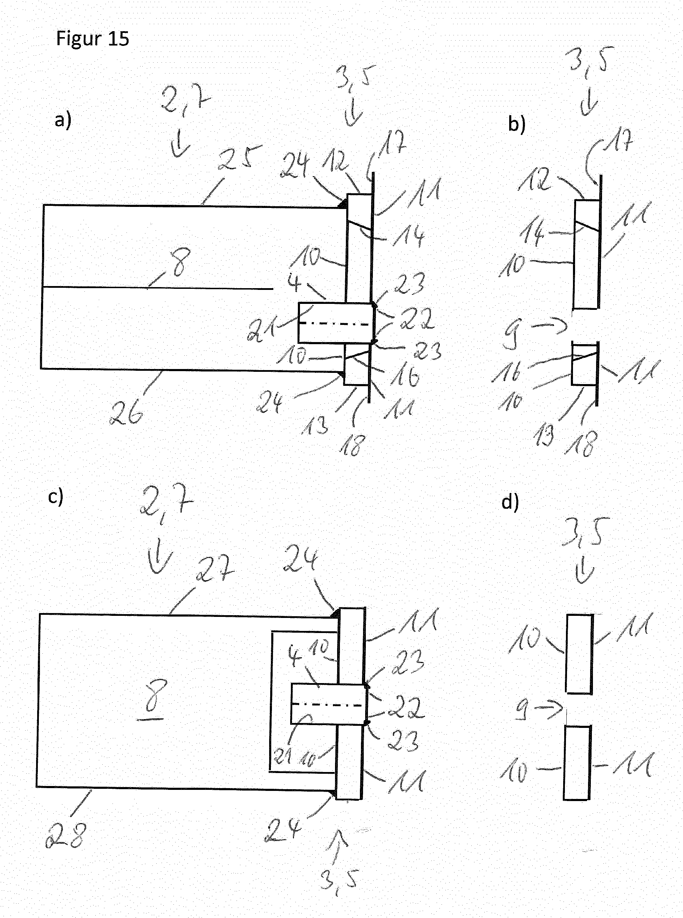

- Figur 15b und 15d:: ein Ausführungsbeispiel einer Crashboxflanschplatte für eine erfindungsgemäße Stoßfängeranordnung in zwei unterschiedlichen Ansichten,
- Figur 15a und 15c:: die Crashboxflanschplatte der Figuren b und d mit daran angeordneter Crashbox,

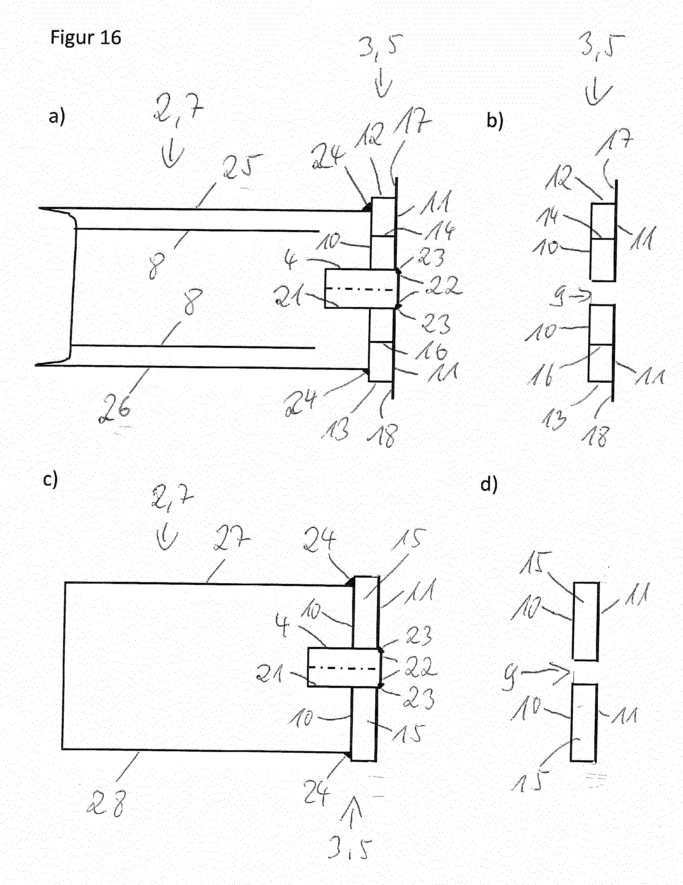

- Figur 16b und 16d:: ein Ausführungsbeispiel einer Crashboxflanschplatte für eine erfindungsgemäße Stoßfängeranordnung in zwei unterschiedlichen Ansichten,
- Figur 16a und 16c:: die Crashboxflanschplatte der Figuren b und d mit daran angeordneter Crashbox,

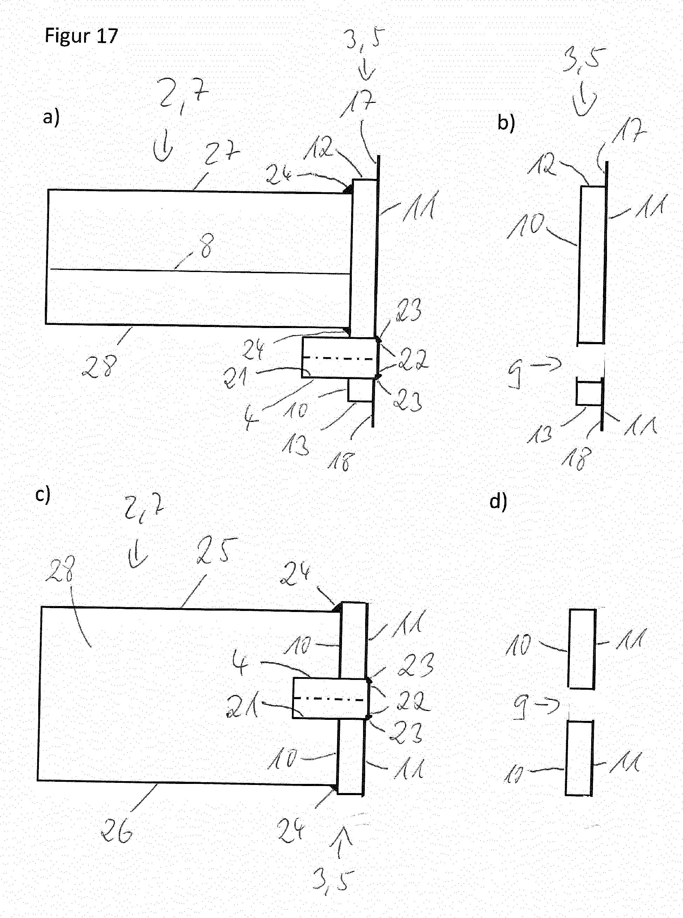

- Figur 17b und 17d:: ein Ausführungsbeispiel einer Crashboxflanschplatte für eine erfindungsgemäße Stoßfängeranordnung in zwei unterschiedlichen Ansichten und
- Figur 17a und 17c:: die Crashboxflanschplatte der Figuren b und d mit daran angeordneter Crashbox.

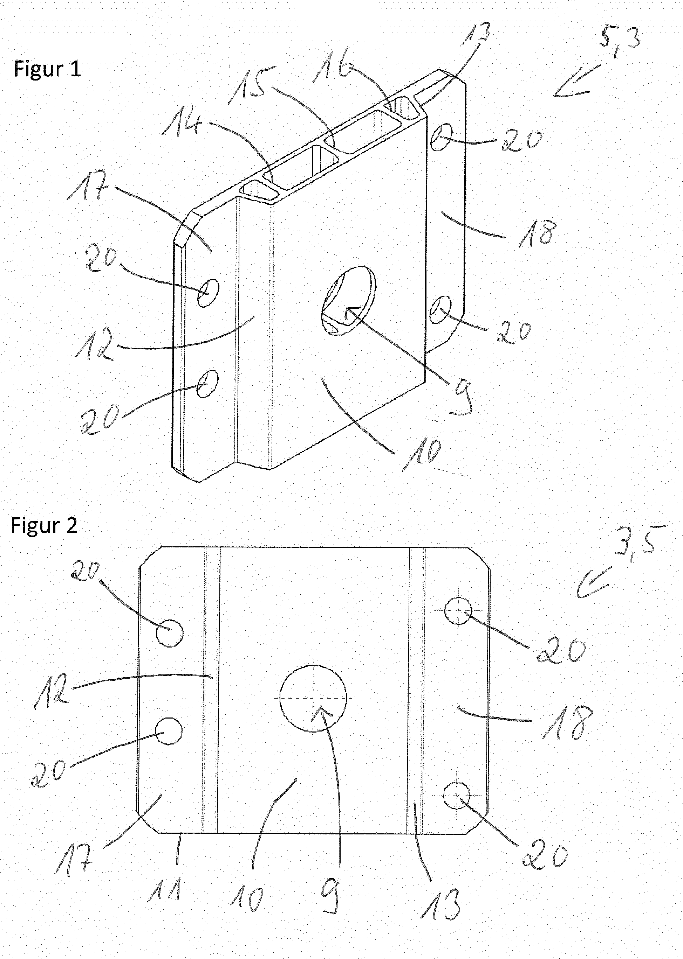

Die Figur 1 zeigt ein erstes Ausführungsbeispiel einer Flanschplatte 3 für eine erfindungsgemäße Stoßfängeranordnung. Die Crashboxflanschplatte 3 ist dabei als Hohlkammerprofil 5 ausgebildet und weist eine Rückwand 11, eine Vorderwand 10 sowie zwei die Rückwand 11 und die Vorderwand 10 verbindende Seitenwände 12 und 13 auf. Die Rückwand 11 weist dabei noch über die Seitenwände 12 und 13 hinausragende Stege 17 und 18 auf, in welche Montageöffnungen 20 angeordnet sind, mit deren Hilfe die Crashboxflanschplatte 3 an einer Karosserie eines Kraftfahrzeuges, insbesondere einem Längsträger einer Kraftfahrzeugkarosserie lösbar, beispielsweise mittels Schraubverbindungen, angeordnet werden kann. Das Hohlkammerprofil 5 der Crashboxflanschplatte 3 ist vorliegend als Vierkammerhohlprofil ausgebildet, wobei zwischen der Rückwand 11 und der Vorderwand 10 vier Hohlkammern ausgebildet sind, welche durch die Vorderwand 10 und die Rückwand 11 verbindende Innenwände 14, 15 und 16 voneinander getrennt sind. Die äußeren Hohlkammern werden dabei noch von den Seitenwänden 12 und 13 begrenzt.

Ferner weist die Crashboxflanschplatte 3 eine Öffnung 9 auf, die sich von der Vorderseite 10 durch das Hohlkammerprofil 5 der Crashboxflanschplatte 3 bis zur Rückwand 11 der Crashboxflanschplatte 3 erstreckt.

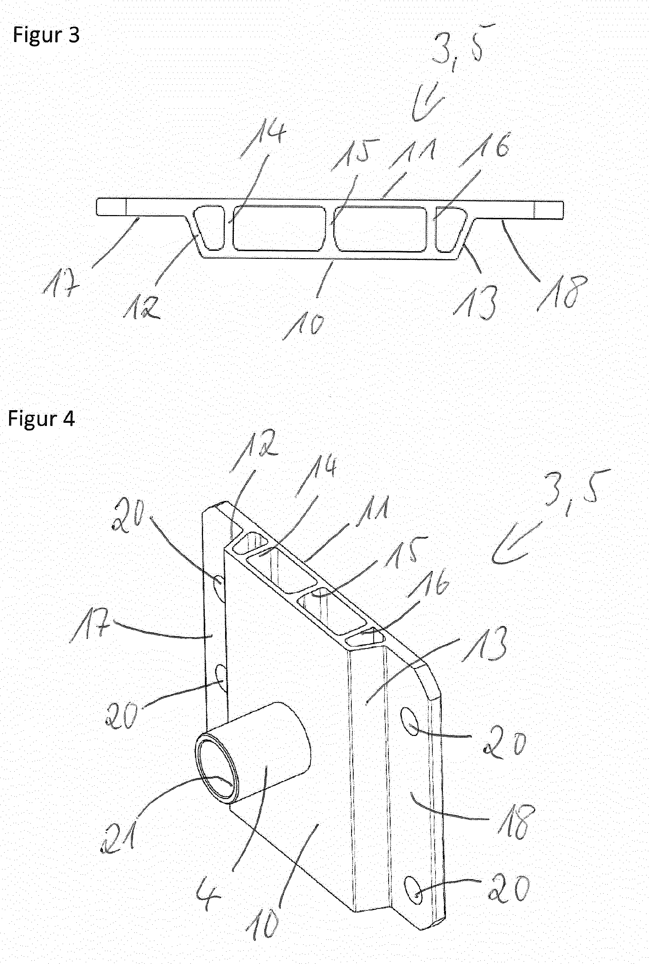

In der Figur 2 ist die Crashboxflanschplatte der Figur 1 in einer Draufsicht auf die Vorderwand 10 und die zur Vorderwand 10 hinweisenden Flächen der Stege 17 und 18 der Rückwand 11 dargestellt. Insbesondere ist hierbei erkennbar, dass die die Rückwand 11 und Vorderwand 10 verbindenden Seitenwände 12 und 13 abgeschrägt ausgebildet sind und somit nicht in einem rechten Winkel zu der Rückwand 11 und der Vorderwand 10 der Crashboxflanschplatte 3 stehen, wie dies insbesondere auch der Querschnittdarstellung durch das Hohlkammerprofil 5 der Crashboxflanschplatte 3 wie in Figur 3 dargestellt zu erkennen ist. Die Innenwände 14, 15 und 16 stehen im Gegensatz zu den Seitenwänden 12 und 13 senkrecht auf der Rückwand 11 und der Vorderwand 10 und verbinden diese miteinander.

In der Figur 2 ist ebenfalls deutlich zu erkennen, dass sich die Öffnung 9 von der Vorderwand 10 durch das gesamte Hohlkammerprofil 5 der Crashboxflanschplatte 3 hindurch bis durch die Rückwand 11 erstreckt.

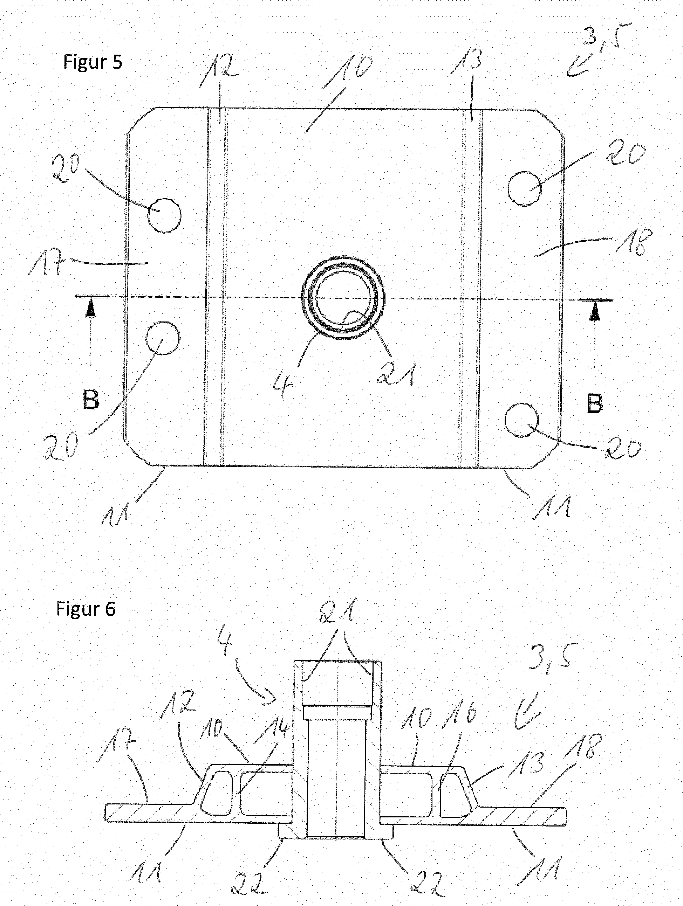

Die Figuren 4 bis 6 zeigen den Figuren 1 bis 3 entsprechende Darstellungen der Crashboxflanschplatte 3 der Figuren 1 bis 3, wobei jedoch hier durch die Öffnungen 9 eine Aufnahme 4 zur lösbaren Anordnung einer Abschleppeinrichtung durchgesteckt ist. Die Figur 6 zeigt dabei eine Querschnittdarstellung entlang der Ebene B-B der Figur 5. Da die Öffnungen 9 mittig im Zentrum der Crashboxflanschplatte 3 angeordnet ist, ist auch die Aufnahme 4 zur lösbaren Anordnung einer Abschleppeinrichtung mittig in der Crashboxflanschplatte angeordnet. Die Aufnahme 4 weist dabei ein Innengewinde 21 auf, in welches ein entsprechendes Außengewinde einer Abschleppeinrichtung, beispielsweise eine Abschleppöse eingreifen kann. Im vorliegenden wie auch in den nachfolgend beschriebenen Ausführungsbeispielen ist die Aufnahme 4 als Gewindehülse mit einem Innengewinde 21 ausgebildet. Deutlich zu erkenne ist insbesondere in der Figur 6, dass die Aufnahme 4 einen Kragen 22 aufweist, mit dem sie nach dem Durchstecken durch die Öffnung 9 in der Crashboxflanschplatte 3 an deren Rückwand 11 anliegt beziehungsweise sich daran abstützt.

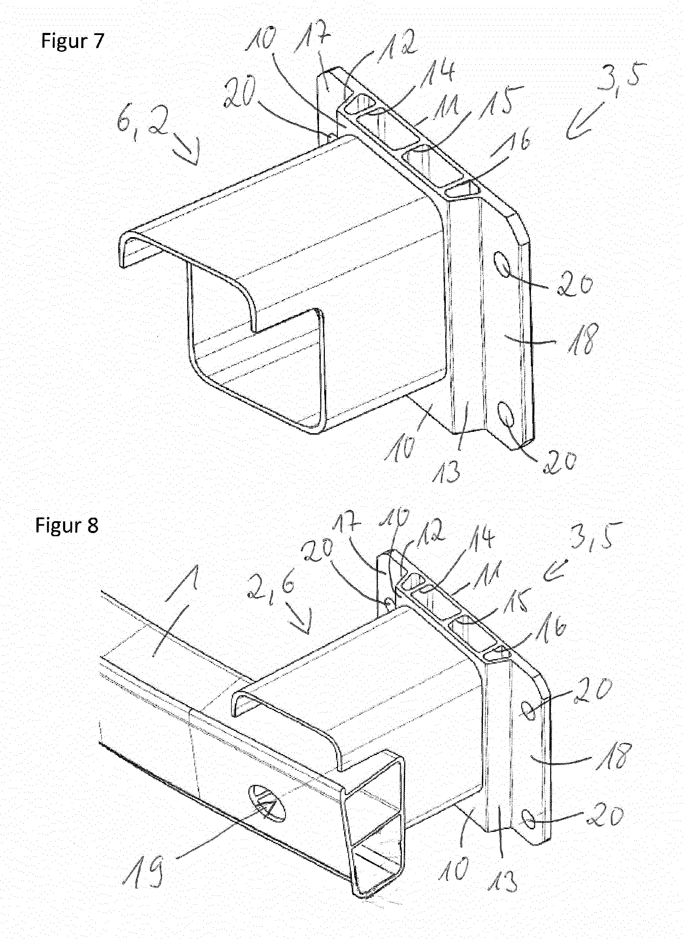

In der Figur 7 ist nunmehr eine perspektivische Ansicht der Crashboxflanschplatte 3 der Figuren 1 bis 6 gezeigt, wobei auf der Vorderwand 10 der Crashboxflanschplatte 3 eine als Einkammerhohlprofil 6 ausgebildete Crashbox gefügt ist. Dabei ist das Fügen vorteilhafterweise mittels eines Verschweißens erfolgt, da sowohl die Crashbox 2 als auch die Crashboxflanschplatte 3 aus einem schweißbaren Metall hergestellt sind. Vorteilhafterweise können dabei sowohl die Crashbox 2 als auch die Crashboxflanschlatte 3 als Extrusionsprofil ausgebildet sein. Die Schweißverbindung kann dabei über den gesamten Umfang der Crashbox 2 erfolgen. Alternativ ist es natürlich auch möglich, dass das Fügen mittels Verschweißen nur abschnittsweise beziehungsweise punktweise erfolgt.

In der Figur 8 ist nunmehr die Anordnung der Crashbox 2 an der Flanschplatte 3 in einer perspektivischen Darstellung gezeigt, wobei an dem der Crashboxflanschplatte 3 gegenüberliegenden Ende der Crashbox 2 nunmehr ein Querträger 1 angeordnet ist. Der Querträger 1 weist dabei eine Öffnung 19 auf, die derart im Querträger 1 angeordnet ist, dass durch diese Öffnung 19 eine Abschleppeinrichtung, insbesondere eine Abschleppöse, durchgesteckt und in Eingriff mit der Aufnahme 4 gebracht werden kann. Die Verbindung zwischen Crashbox 2 und Querträger 1 kann dabei ebenfalls durch ein Fügen mittels eines Schweißverfahrens erfolgen. Alternativ ist es natürlich auch möglich den Querträger 1 mit der Crashbox 2 lösbar, beispielsweise mittels einer Schraubverbindung zu verbinden.

In der Figur 9b wird eine als Hohlkammerprofil 5 ausgebildete Crashboxflanschplatte 3schematisch in einer Querschnittdarstellung und Ansicht von oben dargestellt, wobei hierbei die Crashboxflanschplatte 3 ebenfalls wieder eine Vorderwand 10, eine Rückwand 11 und diese verbindende Seitenwände 12 und 13 aufweist. Zudem sind innerhalb des Hohlkammerprofils 5 der Crashboxflanschplatte 3 Innenwände 14, 15 und 16 angeordnet, die ebenfalls die Vorderwand 10 mit der Rückwand 11 verbinden. Auch in diesem Ausführungsbeispiel weisen Stege 17 und 18 der Rückwand 11 über die Seitenwände 12 hinaus. Deutlich zu erkennen ist in der Darstellung der Figur 9b auch die Öffnung 9 innerhalb der Crashboxflanschplatte 3.

In der Figur 9a ist nunmehr an der Crashboxflanschplatte 3 sowohl eine Crashbox 2, welche vorliegend als Einkammerhohlprofil 6 ausgebildet ist, und eine Aufnahme 4 mit einem Innengewinde 21 zur lösbaren Anordnung einer Abschleppeinrichtung angeordnet. Dabei ragt die Crashbox 2 mit Seitenwänden 25 und 26 über die Vorderwand 10 der Crashboxflanschplatte 3 bis zu deren Hinterwand 11 hinaus und stützt sich dabei mit der Seitenwand 26 an der Seitenwand 12 der Crashboxflanschplatte 3 und mit der Seitenwand 25 an der Seitenwand 13 der Crashboxflanschplatte 3 ab. Im Bereich, in dem die Crashboxflanschplatte 3 mit ihren Seitenwänden 25 und 26 nunmehr an der Rückwand 11 der Crashboxflanschplatte anliegt, ist die Crashbox 6 mittels einer Schweißverbindung 24 mit der Crashboxflanschplatte 3 gefügt. Die durch die Öffnung 9 hindurchgesteckte Aufnahme 4 weist dabei einen umlaufenden Kragen 22 auf, der sich an der Rückwand 11 der Crashboxflanschplatte 3 abstützt und mittels einer Schweißverbindung 23 mit dieser gefügt ist. Auch mit der Vorderwand 10 ist die Aufnahme 4 mittels einer Schweißverbindung 23 gefügt.

Die Figur 9d zeigt nunmehr eine Querschnittdarstellung der Crashboxflanschplatte 3 der Figur 9b in einer entsprechenden Ansicht von der Seite. In der Figur 9c ist eine entsprechende Seitenansicht im Querschnitt durch die Innenwand 15 gezeigt, in welcher eine Crashbox 2 bereits an der Crashboxflanschplatte 3 angeordnet ist. Auch hierbei ist die Crashboxflanschplatte 3 mittels einer Schweißverbindung 24 an der oberen Wand 27 und an der unteren Wand 28 der Crashbox 2 gefügt. Die Schweißverbindung 24 kann dabei die gesamte Crashbox 2 umlaufen. Alternativ kann es natürlich auch sein, dass die Schweißverbindung 24 nur abschnittsweise oder punktuell ausgebildet ist.

In der Figur 10 ist ein Ausführungsbeispiel einer Crashboxflanschplatte 3 gezeigt, an welche eine Crashbox 2 angeordnet ist. Die Crashbox 2 ist hierbei wieder als Einkammerhohlprofil 6 ausgebildet, während die Crashboxflanschplatte 3 als Mehrkammerhohlprofil mit vier Hohlkammern ausgebildet ist. Die Hohlkammern sind dabei wieder durch die Vorderwand 10, die Rückwand 11 sowie die Seitenwände 12 und 13 sowie die Innenwände 14, 15 und 16 gebildet. Auch weist in diesem Ausführungsbeispiel die Rückwand 11 wieder über die Seitenwände 12 und 13 hinausragende Stege 17 und 18 auf, in welche Montageöffnungen 20 zur insbesondere lösbaren Anordnung der Crashboxflanschplatte 3 an einer Kraftfahrzeugkarosserie, insbesondere einem Längsträger einer Kraftfahrzeugkarosserie angeordnet sind.

Im Gegensatz zu dem Ausführungsbeispiel der Crashboxflanschplatte 3 der Figuren 1 bis 6 sind die Seitenwände 12 und 13 hierbei senkrecht zur Vorderwand 10 und zur Rückwand 11 ausgebildet. An diesen Seitenwänden 12 und 13 stützt sich die Crashbox 2 mit Seitenwänden 25 und 26 ab, wobei die Seitenwände 25 und 26 sich bis zur Rückwand 11 bzw. den Stegen 17 und 18 der Rückwand 11 erstrecken. Die obere Wand 27 sowie die hier nicht dargestellte untere Wand 28 der Crashbox 2 erstreckt sich nur bis zur Vorderwand 10.

Die Crashbox 2 kann nunmehr wieder mittels einer hier nicht dargestellten Schweißverbindung mit der Crashboxflanschplatte 3 gefügt sein, wobei diese Schweißverbindung wieder die gesamte Crashbox umlaufend ausgebildet sein kann. Alternativ ist es natürlich auch hierbei möglich, die Schweißverbindung nur abschnittsweise oder punktuell zu erstellen.

In der Figur 11b ist eine Crashboxflanschplatte 3 entsprechend der Crashboxflanschplatte der Figur 5b in einer Querschnittdarstellung gezeigt. Die Crashboxflanschplatte 3 der Figur 11b entspricht dabei der der Figur 9b. In der Figur 11a ist nunmehr wieder die Crashboxflanschplatte 3 der Figur 11b gezeigt, wobei hier bereits eine Crashbox 2 an der Crashboxflanschplatte 3 angeordnet beziehungsweise mit dieser gefügt ist. Im Gegensatz zu dem Ausführungsbeispiel der Figur 9a ist die Crashboxflanschplatte 3, die ebenfalls als Einkammerhohlprofil 6 ausgebildet ist, nunmehr im Bereich der Vorderwand 10 mit der Crashboxflanschplatte 3 gefügt. Die Schweißverbindung 24 kann dabei wiederum die gesamte Crashbox 2 über die Seitenwände 25 und 26 sowie die obere Wand 27 und die untere Wand 28 umlaufend ausgebildet sein. Allerdings ist es auch hier möglich, die Schweißverbindung 24 nur abschnittsweise oder punktuell auszubilden.

Auch in diesem Ausführungsbeispiel ist die Aufnahme 4 durch die Öffnung 9 der Crashboxflanschplatte 3 hindurchgesteckt und stützt sich mit einem umlaufenden Kragen 22 an der Rückseite 11 der Crashboxflanschplatte 3 ab. Im Bereich des umlaufenden Kragens 22 ist die Aufnahme 4 mittels einer Schweißverbindung 23 mit der Crashboxflanschplatte 3 an deren Rückseite 11 gefügt. Auch in diesem Ausführungsbeispiel weist die Aufnahme 4 ein Innengewinde 21 auf, welches mit einem entsprechenden Außengewinde einer Abschleppeinrichtung, insbesondere einer Abschleppöse korrespondiert.

In der Figur 11d ist eine Querschnittdarstellung in einer Seitenansicht durch die Innenwand 15 der Crashboxflanschplatte 3 gezeigt.

Entsprechend zeigt Figur 11c die Anordnung der Crashbox 2 an der Crashboxflanschplatte 3 in einer Querschnittdarstellung durch die Innenwand 15 der Crashboxflanschplatte 3.

In der Figur 12 ist ein weiteres Ausführungsbeispiel einer Crashboxflanschplatte 3 für eine erfindungsgemäße Stoßfängeranordnung gezeigt, an welche bereits eine Crashbox 2 angeordnet ist. Die Crashbox 2 ist dabei wieder als Einkammerhohlprofil 6 ausgebildet und weist zwei Seitenwände 25 und 26 auf, welche sich bis zu einer Vorderwand 10 der Crashboxflanschplatte 3 erstrecken und dort über eine Schweißverbindung 24 mit der Crashboxflanschplatte 3 gefügt sind. Die Crashboxflanschplatte 3 ist vorliegend wieder als Mehrkammerhohlprofil ausgebildet, wobei die einzelnen Hohlkammern wiederum durch die Vorderwand 10 und die Rückwand 11 sowie die diese verbindenden Seitenwände 12 und 13 sowie Innenwände 14 und 16 gebildet sind. In der Crashboxflanschplatte 3 ist in der Darstellung der Figur 12 bereits eine Aufnahme 4 zur lösbaren Anordnung einer Abschleppeinrichtung, insbesondere einer Abschleppöse durch die Öffnung 9 innerhalb der Crashboxflanschplatte 3 durchgesteckt. Die Aufnahme 4 stützt sich dabei mit einem umlaufenden Kragen 22 an der Rückwand 11 der Crashboxflanschplatte 3 ab und ist dort auch mit dieser gefügt. An dem, dem Kragen 22 gegenüberliegenden Ende der Aufnahme 4 weist diese ein Innengewinde 21 auf, welches mit einem Außengewinde einer Abschleppeinrichtung insbesondere einer Abschleppöse korrespondiert. Die Rückwand 11 der Crashboxflanschplatte 3 weist auch in diesem Ausführungsbeispiel über die Seitenwände 12 und 13 hinausragende Stege 17 und 18 auf, welche beispielsweise Montageöffnungen zur insbesondere lösbaren Anordnung der Crashboxflanschplatte 3 an einer Kraftfahrzeugkarosserie, insbesondere einem Längsträger einer Kraftfahrzeugkarosserie, auf.

Die Figur 13b zeigt nunmehr eine Crashboxflanschplatte 3 in einer Querschnittdarstellung in einer Ansicht von oben wobei das Hohlkammerprofil 5 der Crashboxflanschplatte 3 durch die Vorderwand 10 und die Rückwand 11 sowie diese verbindende Seitenwände 12 und 13 gebildet ist.

Figur 13a zeigt eine Querschnittdarstellung der Crashboxflanschplatte der Figur 13b, wo bereits eine Crashbox 2 an der Crashboxflanschplatte 3 angeordnet ist. Hierbei ist deutlich erkennbar, dass das Hohlkammerprofil 5 der Crashboxflanschplatte 3 nun gänzlich innerhalb des Einkammerhohlprofils 6 der Crashbox 2 liegt. Die Crashbox 2 erstreckt sich mit ihren Seitenwänden 25 und 26 bis zu den Stegen 17 und 18 der Rückwand 11 der Crashboxflanschplatte 3 und ist dort mittels einer Schweißverbindung 24 mit der Crashboxflanschplatte 3 gefügt. Dabei sind die Seitenwände 25 und 26 der Crashbox 2 von den Seitenwänden 12 und 13 der Crashboxflanschplatte 3 beabstandet. Die Anordnung in der Aufnahme 4 mit Innengewinde 21 innerhalb der Öffnung 9 der Crashboxflanschplatte 3 entspricht im Wesentlichen der, der zuvor beschriebenen Ausführungsbeispiele.

Die Figuren 13c und 13d zeigen nun wieder entsprechende Querschnittdarstellungen durch die Innenwand 15 der Crashboxflanschplatte 3 also in einer Seitenansicht.

In der Figur 14 ist ein weiteres Ausführungsbeispiel einer Crashboxflanschplatte 3 in einer Querschnittdarstellung gezeigt, an die bereits eine Crashbox 2 angeordnet ist. Die Crashboxflanschplatte 3 ist dabei als Mehrkammerhohlprofil 5 ausgebildet, wobei die Hohlkammern durch die Seitenwände 12 und 13, die Vorderwand 10 und 11 sowie die dazu parallel verlaufende Innenwand 15' und dazu senkrecht stehenden Innenwände 14, 14' sowie 16 und 16' gebildet sind.

Auch in diesem Ausführungsbeispiel sind die Seitenwände 25 und 26 der Crashbox 2 von den Seitenwänden 12 und 13 der Crashboxflanschplatte 3 beabstandet. Die Seitenwände 12 und 13 der Crashboxflanschplatte 3 stehen dabei wieder in einem Winkel ungleich 90° auf der Rückwand 11 und der Vorderwand 10 der Crashboxflanschplatte. Die Verbindung der Crashboxflanschplatte 3 mit der Crashbox 2 erfolgt auch hierbei wieder über ein Fügen mittels eines Schweißverfahrens unter Ausbildung einer Schweißverbindung 24. Die Aufnahme 4 ist vorliegend wieder mit einem Kragen 22 ausgebildet, der sich an der Rückwand 11 der Crashboxflanschplatte 3 abstützt und dort mit dieser mittels einer Schweißverbindung 23 gefügt ist. Auch diese Aufnahme 4 weist wieder ein Innengewinde 21 auf, das mit einem entsprechenden Außengewinde einer Abschleppöse korrespondiert.

Während bei allen zuvor beschriebenen Ausführungsbeispielen die Öffnung 9 zum Durchstecken der Aufnahme 4 innerhalb der Crashboxflanschplatte 3 mittig angeordnet ist, ist in dem Ausführungsbeispiel der Figuren 15a bis 15d nunmehr eine Crashboxflanschplatte gezeigt, die eine Öffnung 9 außerhalb der Mitte der Crashboxflanschplatte 3 aufweist. Die Crashboxflanschplatte 3 ist dabei wieder als Mehrkammerhohlprofil 5 ausgebildet, wie insbesondere in der Querschnittdarstellung der Figur 15b zu erkennen ist. Die mehreren Hohlkammern bilden sich dabei wieder durch die Vorderwand 10, die Rückwand 11 sowie diese verbindenden Seitenwände 12 und 13 sowie die Innenwände 14 und 16 aus.

In der Darstellung der Figur 15a ist nunmehr die Crashboxflanschplatte 3 mit einer Crashbox 2 gefügt, wobei die Crashbox 2 als Mehrkammerhohlprofil 7 ausgebildet ist. Die Crashbox 2 weist dabei eine im Bereich der Aufnahme 4 lokal ausgeschnittene Innenwand 8 auf. Die Seitenwände 25 und 26 sind in diesem Ausführungsbeispiel wieder im Bereich der Vorderwand 10 mittels einer Schweißverbindung 24 mit der Crashboxflanschplatte 3 gefügt.

In der Darstellung gemäß der Figur 15d wird eine Querschnittdarstellung von der Seite gezeigt. Insbesondere der Darstellung der Figur 15c ist dabei zu entnehmen, dass die Innenwand 8 der Crashbox 2 dabei im Bereich der Aufnahme 4 lokal ausgeschnitten ist.

Die Figuren 16a bis 16d zeigen nunmehr ein Ausführungsbeispiel, welches im Wesentlichen dem der Figuren 11a bis 11d entspricht, wobei allerdings die Crashboxflanschplatte 3 hier nicht mit einer als Einkammerhohlprofil ausgebildeten Crashbox 2 verbunden ist. Vielmehr ist die Crashbox 2 in diesem Ausführungsbeispiel als Mehrkammerhohlprofil ausgebildet. Dabei sind innerhalb der Crashbox 2 Innenwände 8 angeordnet, durch welche die mehreren Kammern des Mehrkammerhohlprofils 7 ausgebildet werden.

Die Figuren 17a bis 17d zeigen nunmehr im Gegensatz zu den bisherig beschriebenen Ausführungsbeispielen, bei denen die Aufnahme 4 innerhalb einer Hohlkammer der Crashbox 2 angeordnet war, ein Ausführungsbeispiel, bei dem die Aufnahme 4 außerhalb der Crashbox 2 angeordnet ist.

In der Figur 7b ist dabei eine Querschnittdarstellung einer Crashboxflanschplatte 3 gezeigt, die einer Seitenansicht entspricht. Die Crashboxflanschplatte 3 ist dabei als Einkammerhohlprofil ausgebildet und weist eine Vorderwand 10, eine Rückwand 11 sowie eine obere Seitenwand 12 und eine untere Seitenwand 13 auf, wobei die beiden Seitenwände 12 und 13 die Vorderwand 10 und Rückwand 11 miteinander verbinden und auf diesen senkrecht stehen. Die Rückwand 11 weist auch in diesem Ausführungsbeispiel mit Stegen 17 und 18 über die Seitenwände 12 hinaus. Innerhalb der Crashboxflanschplatte 3 ist wieder eine Öffnung 9 für eine Aufnahme 4 zur lösbaren Anordnung einer Abschleppeinrichtung, insbesondere einer Abschleppöse vorgesehen. Die Öffnung 9 liegt aber nicht mittig in der Crashboxflanschplatte 3, sondern ist in der unteren Hälfte der Crashboxflanschplatte 3 angeordnet.

In der Figur 17a ist nunmehr an der Crashboxflanschplatte 3 sowohl eine Crashbox 2, welche vorliegend als Mehrkammerhohlprofil 7 mit zwei durch eine Innenwand 8 getrennt Hohlkammern eine ausgebildet ist, und eine Aufnahme 4 mit einem Innengewinde 21 zur lösbaren Anordnung einer Abschleppeinrichtung angeordnet. Dabei ist die Crashbox 2 mit oberen Wand 25 und unteren Wand 26 mittels Schweißverbindungen 24 an die Vorderwand 10 der Crashboxflanschplatte 3 gefügt. Die durch die Öffnung 9 hindurchgesteckte Aufnahme 4 weist dabei einen umlaufenden Kragen 22 auf, der sich an der Rückwand 11 der Crashboxflanschplatte 3 abstützt und mittels einer Schweißverbindung 23 mit dieser gefügt ist. Auch mit der Vorderwand 10 kann die Aufnahme 4 mittels einer Schweißverbindung 23 gefügt sein, dies ist hier allerdings nicht dargestellt. Die Aufnahme 4 ist vorliegend außerhalb der Crashbox 2 angeordnet, so dass ein an die Crashbox 2 angeordneter Querträger keine Öffnung zum Durchstecken einer Abschleppeinrichtung aufweisen muss. Vielmehr kann diese unten an dem Querträger vorbeigeführt und mit der Aufnahme 4 verbunden werden. Dies ist insbesondere auch der Figur 17c zu entnehmen, welche eine Draufsicht von unten auf die Crashboxflanschplatte3 mit daran angeordneter Crashbox 2 zeigt. Insbesondere ist hier durch die Draufsicht auf die untere Wand 28 der Crashbox 2 deutlich zu erkennen, dass die Aufnahme 4 außerhalb der Crashbox 2 angeordnet ist. Figur 17d zeigt die Crashboxflanschplatte 3 ohne Aufnahme 4 und ohne daran angeordnete Crashbox 2.

### Bezugszeichenliste

- 1: Querträger
- 2: Crashbox
- 3: Crashboxflanschplatte
- 4: Aufnahme
- 5: Hohlkammerprofil
- 6: Einkammerhohlprofil
- 7: Mehrkammerhohlprofil
- 8: Innenwand
- 9: Öffnung
- 10: Vorderwand
- 11: Rückwand
- 12: Seitenwand
- 13: Seitenwand
- 14: Innenwand
- 14': Innenwand
- 15: Innenwand
- 15': Innenwand
- 16: Innenwand
- 16': Innenwand
- 17: Steg
- 18: Steg
- 19: Öffnung
- 20: Montageöffnung
- 21: Innengewinde
- 22: Kragen
- 23: Schweißverbindung
- 24: Schweißverbindung
- 25: Seitenwand
- 26: Seitenwand
- 27: obere Wand
- 28: untere Wand

## Patentansprüche

1. Stoßfängeranordnung für ein Kraftfahrzeug mit einem Querträger (1), an dem Crashboxen (2) gekoppelt sind, wobei an den Crashboxen (2) gegenüberliegend dem Querträger (1) Crashboxflanschplatten (3) zum Befestigen der Crashboxen (2) an einer Karosserie oder einem Fahrgestell eines Kraftfahrzeugs angeordnet sind, wobei an wenigstens einer Crashboxflanschplatte (3) eine sich in Richtung des Querträgers (1) erstreckende Aufnahme (4) kraft-, form- und/oder stoffschlüssig angeordnet ist, wobei die Aufnahme (4) zur lösbaren Anordnung einer Abschleppeinrichtung ausgebildet ist, **dadurch gekennzeichnet, dass** die wenigstens eine Crashboxflanschplatte (3) als Hohlkammerprofil (5) ausgebildet ist.

2. Stoßfängeranordnung nach Anspruch 1, **dadurch gekennzeichnet, dass** die wenigstens eine Crashboxflanschplatte (3) als Einkammerhohlprofil ausgebildet ist.

3. Stoßfängeranordnung nach Anspruch 1, **dadurch gekennzeichnet, dass** die wenigstens eine Crashboxflanschplatte (3) als Mehrkammerhohlprofil ausgebildet ist.

4. Stoßfängeranordnung nach einem der vorhergehenden Ansprüche, **dadurch gekennzeichnet, dass** die Crashboxflanschplatte (3) eine Vorderwand (10), eine Rückwand (11) sowie zwei die Vorderwand (10) und die Rückwand (11) verbindende Seitenwände (12, 13) aufweist.

5. Stoßfängeranordnung nach einem der Ansprüche 3 oder 4, **dadurch gekennzeichnet, dass** die Crashboxflanschplatte (3) wenigstens eine die Vorderwand (10) und die Rückwand (11) verbindende Innenwand (14, 15, 16) aufweist.

6. Stoßfängeranordnung nach einem der Ansprüche 4 bis 6, **dadurch gekennzeichnet, dass** die Rückwand (11) Stege (17, 18) aufweist, welche über die Seitenwände (12. 13) hinausragen.

7. Stoßfängeranordnung nach einem der Ansprüche 4 bis 6, **dadurch gekennzeichnet, dass** auf der Vorderwand (10) der wenigstens einen Crashboxflanschplatte (3) eine Crashbox (2) gefügt ist.

8. Stoßfängeranordnung nach einem der Ansprüche 4 bis 6, **dadurch gekennzeichnet, dass** auf der Rückwand (11) der Crashboxflanschplatte (3) eine Crashbox (2) gefügt ist.

9. Stoßfängeranordnung nach Anspruch 8, **dadurch gekennzeichnet, dass** sich die Crashbox (2) an wenigstens einer der Seitenwände (12, 13) abstützt beziehungsweise daran anliegt.

10. Stoßfängeranordnung nach einem der vorhergehenden Ansprüche, **dadurch gekennzeichnet, dass** die wenigstens eine Crashboxflanschplatte (3) als Extrusionsprofil ausgebildet ist.

11. Stoßfängeranordnung nach einem der vorhergehenden Ansprüche, **dadurch gekennzeichnet, dass** die Crashboxen (2) als Einkammerhohlprofil (6) ausgebildet sind.

12. Stoßfängeranordnung nach einem der Ansprüche 1 bis 4, **dadurch gekennzeichnet, dass** die Crashboxen (2) als Mehrkammerprofil (7) ausgebildet sind.

13. Stoßfängeranordnung nach einem der vorhergehenden Ansprüche, **dadurch gekennzeichnet, dass** innerhalb der wenigstens eine Crashboxflanschplatte (3) eine durchgehende Öffnung (8) vorgesehen ist, in welcher die Aufnahme (4) zur lösbaren Anordnung einer Abschleppeinrichtung durchgesteckt ist.

14. Stoßfängeranordnung nach einem der vorhergehenden Ansprüche, **dadurch gekennzeichnet, dass** die Aufnahme (4) mit der Crashboxflanschplatte (3), an der sie angeordnet ist, gefügt ist, wobei sie insbesondere mit der Rückwand (11) und/oder der Vorderwand (10) der Crashboxflanschplatte (3) verschweißt ist.

15. Stoßfängeranordnung nach einem der vorhergehenden Ansprüche, **dadurch gekennzeichnet, dass** der Querträger (1) eine durchgehende Öffnung (19) aufweist, mittels welcher die Aufnahme (4) für eine lösbare Abschleppeinrichtung zugänglich ausgebildet ist.

16. Stoßfängeranordnung nach einem der vorhergehenden Ansprüche, **dadurch gekennzeichnet, dass** die die Rückwand (11) und die Vorderwand (10) der Crashboxflanschplatte (3) verbindenden Innenwände (14, 15, 16) innerhalb des Hohlkammerprofils diagonal verlaufend und gegebenenfalls sich kreuzend ausgebildet sind.

17. Stoßfängeranordnung nach einem der vorhergehenden Ansprüche, **dadurch gekennzeichnet, dass** sich die Aufnahme (4) innerhalb oder außerhalb der Crashbox angeordnet ist.

## Claims

1. Bumper assembly for a motor vehicle, with a crossmember (1) to which crash boxes (2) are coupled, wherein crash box flange plates (3) for fastening the crash boxes (2) to a body or a chassis of a motor vehicle are arranged on the crash boxes (2) opposite the crossmember (1), wherein a receptacle (4) extending in the direction of the crossmember (1) is arranged in a force-fitting, form-fitting and/or integrally bonded manner on at least one crash box flange plate (3), wherein the receptacle (4) is designed for the releasable arrangement of a towing device, **characterized in that** the at least one crash box flange plate (3) is in the form of a hollow chamber profile (5).

2. Bumper assembly according to Claim 1, **characterized in that** the at least one crash box flange plate (3) is in the form of a single-chamber hollow profile.

3. Bumper assembly according to Claim 1, **characterized in that** the at least one crash box flange plate (3) is in the form of a multi-chamber hollow profile.

4. Bumper assembly according to one of the preceding claims, **characterized in that** the crash box flange plate (3) has a front wall (10), a rear wall (11) and two side walls (12, 13) connecting the front wall (10) and the rear wall (11).

5. Bumper assembly according to either of Claims 3 and 4, **characterized in that** the crash box flange plate (3) has at least one inner wall (14, 15, 16) connecting the front wall (10) and the rear wall (11).

6. Bumper assembly according to one of Claims 4 to 6, **characterized in that** the rear wall (11) has webs (17, 18) which protrude beyond the side walls (12, 13).

7. Bumper assembly according to one of Claims 4 to 6, **characterized in that** a crash box (2) is joined to the front wall (10) of the at least one crash box flange plate (3).

8. Bumper assembly according to one of Claims 4 to 6, **characterized in that** a crash box (2) is joined to the rear wall (11) of the crash box flange plate (3).

9. Bumper assembly according to Claim 8, **characterized in that** the crash box (2) is supported on at least one of the side walls (12, 13) or lies there against.

10. Bumper assembly according to one of the preceding claims, **characterized in that** the at least one crash box flange plate (3) is in the form of an extrusion profile.

11. Bumper assembly according to one of the preceding claims, **characterized in that** the crash boxes (2) are in the form of a single-chamber hollow profile (6).

12. Bumper assembly according to one of Claims 1 to 4, **characterized in that** the crash boxes (2) are in the form of a multi-chamber profile (7).

13. Bumper assembly according to one of the preceding claims, **characterized in that** a continuous opening (8) is provided within the at least one crash box flange plate (3), in which opening the receptacle (4) to the releasable arrangement of a towing device is inserted.

14. Bumper assembly according to one of the preceding claims, **characterized in that** the receptacle (4) is joined to the crash box flange plate (3) on which said receptacle is arranged, wherein said receptacle is in particular welded to the rear wall (11) and/or to the front wall (10) of the crash box flange plate (3).

15. Bumper assembly according to one of the preceding claims, **characterized in that** the crossmember (1) has a continuous opening (19), by means of which the receptacle (4) is designed to be accessible for a releasable towing device.

16. Bumper assembly according to one of the preceding claims, **characterized in that** the inner walls (14, 15, 16) within the hollow chamber profile, said inner walls connecting the rear wall (11) and the front wall (10) of the crash box flange plate (3), are formed in a manner running diagonally and optionally intersecting.

17. Bumper assembly according to one of the preceding claims, **characterized in that** the receptacle (4) is arranged within or outside the crash box.

## Revendications

1. Système de pare-chocs pour un véhicule automobile, comprenant une traverse (1) à laquelle sont accouplées des crashbox (2), des plaques à bride de crashbox (3) étant disposées au niveau des crashbox (2) à l'opposé de la traverse (1) pour fixer les crashbox (2) à une carrosserie ou à un châssis d'un véhicule automobile, un logement (4) s'étendant dans la direction de la traverse (1) étant disposé par engagement par force, par correspondance de formes et/ou par liaison de matière au niveau d'au moins une plaque à bride de crashbox (3), le logement (4) étant réalisé pour l'agencement amovible d'un dispositif de remorquage, **caractérisé en ce que** l'au moins une plaque à bride de crashbox (3) est réalisée sous forme de profilé à chambre creuse (5).

2. Système de pare-chocs selon la revendication 1, **caractérisé en ce que** l'au moins une plaque à bride de crashbox (3) est réalisée sous forme de profilé creux à une seule chambre.

3. Système de pare-chocs selon la revendication 1, **caractérisé en ce que** l'au moins une plaque à bride de crashbox (3) est réalisée sous forme de profilé creux à plusieurs chambres.

4. Système de pare-chocs selon l'une quelconque des revendications précédentes, **caractérisé en ce que** la plaque à bride de crashbox (3) présente une paroi avant (10), une paroi arrière (11) ainsi que deux parois latérales (12, 13) reliant la paroi avant (10) et la paroi arrière (11).

5. Système de pare-chocs selon l'une quelconque des revendications 3 et 4, **caractérisé en ce que** la plaque à bride de crashbox (3) présente au moins une paroi intérieure (14, 15, 16) reliant la paroi avant (10) et la paroi arrière (11).

6. Système de pare-chocs selon l'une quelconque des revendications 4 à 6, **caractérisé en ce que** la paroi arrière (11) présentent des nervures (17, 18) qui font saillie au-delà des parois latérales (12, 13).

7. Système de pare-chocs selon l'une quelconque des revendications 4 à 6, **caractérisé en ce que** sur la paroi avant (10) de l'au moins une plaque à bride de crashbox (3) est assemblée une crashbox (2).

8. Système de pare-chocs selon l'une quelconque des revendications 4 à 6, **caractérisé en ce que** sur la paroi arrière (11) de la plaque à bride de crashbox (3) est assemblée une crashbox (2).

9. Système de pare-chocs selon la revendication 8, **caractérisé en ce que** la crashbox (2) s'appuie ou s'applique contre au moins l'une des parois latérales (12, 13).

10. Système de pare-chocs selon l'une quelconque des revendications précédentes, **caractérisé en ce que** l'au moins une plaque à bride de crashbox (3) est réalisée sous forme de profilé extrudé.

11. Système de pare-chocs selon l'une quelconque des revendications précédentes, **caractérisé en ce que** les crashbox (2) sont réalisées sous forme de profilé creux à une seule chambre (6).

12. Système de pare-chocs selon l'une quelconque des revendications 1 à 4, **caractérisé en ce que** les crashbox (2) sont réalisées sous forme de profilé à plusieurs chambres (7).

13. Système de pare-chocs selon l'une quelconque des revendications précédentes, **caractérisé en ce qu'**à l'intérieur de l'au moins une plaque à bride de crashbox (3) est prévue une ouverture traversante (8) dans laquelle est enfoncé le logement (4) pour l'agencement amovible d'un dispositif de remorquage.

14. Système de pare-chocs selon l'une quelconque des revendications précédentes, **caractérisé en ce que** le logement (4) est assemblé à la plaque à bride de crashbox (3) au niveau de laquelle il est disposé, le logement étant notamment soudé à la paroi arrière (11) et/ou à la paroi avant (10) de la plaque à bride de crashbox (3).

15. Système de pare-chocs selon l'une quelconque des revendications précédentes, **caractérisé en ce que** la traverse (1) présente une ouverture traversante (19) au moyen de laquelle le logement (4) est réalisé de manière accessible pour un dispositif de remorquage amovible.

16. Système de pare-chocs selon l'une quelconque des revendications précédentes, **caractérisé en ce que** les parois intérieures (14, 15, 16) reliant la paroi arrière (11) et la paroi avant (10) de la plaque à bride de crashbox (3) sont réalisées de manière à s'étendre en diagonale à l'intérieur du profilé à chambre creuse et éventuellement de manière à se croiser.

17. Système de pare-chocs selon l'une quelconque des revendications précédentes, **caractérisé en ce que** le logement (4) est disposé à l'intérieur ou à l'extérieur de la crashbox.
